# FASCICULE DE BREVET EUROPEEN

(11) **EP 3 169 208 B1**
(45) Date de publication et mention de la délivrance du brevet: **19.09.2018**
(21) Numéro de dépôt: 15759849.1
(22) Date de dépôt: 17.07.2015
(51) Int. Cl.: A47J 43/07, A47J 43/25

(54) **OUTIL DE TRAVAIL ROTATIF RÉVERSIBLE ET DISPOSITIF DE PRÉPARATION D'ALIMENTS COMPORTANT UN OUTIL DE TRAVAIL ROTATIF RÉVERSIBLE**
UMKEHRBARES ROTIERENDES VERARBEITUNGSWERKZEUG SOWIE LEBENSMITTELZUBEREITUNGSVORRICHTUNG MIT UMKEHRBAREM ROTIERENDEN VERARBEITUNGSWERKZEUG
REVERSIBLE ROTARY PROCESSING TOOL AND FOOD PREPARATION DEVICE COMPRISING A REVERSIBLE ROTARY PROCESSING TOOL

(30) Priorité: 18.07.2014 FR 1456991
(43) Date de publication de la demande: 24.05.2017
(73) Titulaire: SEB S.A., 69130 Ecully (FR)
(72) Inventeur: CHARLES, Patrick, 65290 Louey (FR); LACOURPAILLE, Gérard, 65380 Ossun (FR)
(74) Mandataire: Bourrières, Patrice
(86) Numéro de dépôt international: PCT/FR2015/051979
(87) Numéro de publication internationale: WO 2016/009163

(56) Documents cités:
- FR-A1- 2 962 023
- FR-A5- 2 210 926
- JP-A- 2005 168 794
- US-A- 1 964 290

## Description

La présente invention concerne le domaine technique des outils de travail rotatifs réversibles utilisés dans le domaine de la préparation des aliments, notamment pour fragmenter et/ou effiler et/ou découper des aliments.
De tels outils de travail rotatifs réversibles se présentent usuellement sous forme de disques présentant un type d'outil de travail par face.
La présente invention concerne également les dispositifs, accessoires et appareils de préparation d'aliments comportant un outil de travail rotatif réversible. Dans une application préférée mais non strictement nécessaire, l'invention se rapporte à un accessoire de préparation d'aliments destiné à être adapté de manière amovible sur un boîtier d'entraînement motorisé.
Il est connu du document US4199112 un outil de travail rotatif réversible comprenant un moyeu d'entraînement selon un axe de rotation et un corps principal s'étendant autour du moyeu d'entraînement, le corps principal présentant deux faces opposées présentant chacune une bordure périphérique et au moins un organe de travail agencé entre le moyeu d'entraînement et la bordure périphérique. Toutefois la hauteur axiale du moyeu d'entraînement correspond à l'épaisseur de la bordure périphérique. Une telle disposition présente l'inconvénient de limiter la hauteur disponible pour réaliser le moyeu d'entraînement, lorsque l'on souhaite limiter l'épaisseur du corps principal, notamment l'épaisseur de la bordure périphérique.

Le document US1964290 A divulge également un outil de travail rotatif. Un objet de la présente invention est de proposer un outil de travail rotatif réversible qui présente un encombrement en hauteur limité tout en permettant une transmission efficace des efforts exercés sur le moyeu d'entraînement.
Un autre objet de la présente invention est de proposer un dispositif de préparation d'aliments comprenant un outil de travail rotatif réversible entraîné par une transmission traversant le moyeu d'entraînement, qui présente un encombrement en hauteur limité tout en permettant une transmission efficace des efforts exercés sur le moyeu d'entraînement.

Un autre objet de la présente invention est de proposer un dispositif de préparation d'aliments du type précité, dans lequel l'outil de travail rotatif réversible est adapté au travail des aliments cuits et/ou friables.

Un autre objet de la présente invention est de proposer un appareil électroménager de préparation culinaire comportant un dispositif de préparation d'aliments du type précité, dans lequel l'outil de travail rotatif réversible est entraîné par une transmission traversant le moyeu d'entraînement et présente un encombrement en hauteur limité tout en permettant une transmission efficace des efforts exercés sur le moyeu d'entraînement.

Ces objets sont atteints avec un outil de travail rotatif réversible comprenant un moyeu d'entraînement selon un axe de rotation Δ et un corps principal entraîné en rotation par le moyeu d'entraînement selon l'axe de rotation Δ, le corps principal s'étendant autour du moyeu d'entraînement, le corps principal présentant deux faces opposées présentant chacune une bordure périphérique et au moins un organe de travail agencé entre le moyeu d'entraînement et la bordure périphérique, du fait que le moyeu d'entraînement présente selon l'axe de rotation Δ une hauteur supérieure à une épaisseur du corps principal selon l'axe de rotation Δ, et que le moyeu d'entraînement est monté mobile par rapport au corps principal selon la direction de l'axe de rotation Δ. Ainsi l'encombrement de l'outil de travail rotatif réversible peut être réduit dans la zone de la bordure périphérique, tout en permettant la réalisation d'un moyeu d'entraînement adapté à une transmission efficace des efforts. L'outil de travail rotatif peut reposer sur l'une ou l'autre des bordures périphériques sans que le moyeu d'entraînement ne dépasse nécessairement par rapport à l'une et l'autre des bordures périphériques. Cette disposition permet également de simplifier l'utilisation de l'outil de travail rotatif, car il n'est pas nécessaire que le moyeu d'entraînement soit bloqué, par exemple monté en force, sur un axe d'entraînement.

Selon une forme de réalisation préférée, le moyeu d'entraînement est monté mobile en translation rectiligne par rapport au corps principal selon la direction de l'axe de rotation Δ. En alternative ou en complément, le moyeu d'entraînement peut notamment être monté mobile par rapport au corps principal avec une composante de rotation autour de l'axe de rotation Δ, par exemple selon un chemin hélicoïdal, et/ou avec au moins une position de verrouillage de type baïonnette, de préférence avec une position de verrouillage de type baïonnette à chaque extrémité de la course du moyeu d'entraînement par rapport au corps principal.

Selon un mode de réalisation avantageux, le moyeu d'entraînement comprend une fenêtre d'entraînement ménageant un passage selon la direction de l'axe de rotation Δ. Cette disposition permet l'utilisation de l'outil de travail rotatif dans un dispositif de préparation d'aliments comprenant une transmission traversant le moyeu d'entraînement.

Avantageusement alors, la plus petite dimension de la fenêtre d'entraînement est formée par une restriction médiane selon la direction de l'axe de rotation Δ. Cette disposition permet de simplifier la réalisation du moyeu d'entraînement.

Avantageusement encore, la fenêtre d'entraînement présente une section croissante selon l'axe de rotation Δ de part et d'autre de la plus petite dimension. Cette disposition permet de faciliter le montage de l'outil de travail rotatif.

Avantageusement encore, le moyeu d'entraînement possède une forme cannelée. Une telle disposition est particulièrement simple à réaliser.

Selon une forme de réalisation, le moyeu d'entraînement est solidaire du corps principal. Cette disposition permet de simplifier la mise en place et le retrait de l'outil de travail rotatif.

En alternative, le moyeu d'entraînement peut être notamment amovible par rapport au corps principal, ou encore être indépendant du corps principal. Ces dispositions peuvent permettre de faciliter le nettoyage de l'outil de travail rotatif.

Avantageusement encore, le ou les organes de travail est/sont agencé(s) entre une portion périphérique du corps principal portant les bordures périphériques et une portion annulaire du corps principal montée coulissante avec le moyeu d'entraînement. Une telle disposition permet d'utiliser la bordure périphérique mais aussi la portion annulaire comme support d'appui lors du traitement des aliments avec l'outil de travail rotatif. Une telle disposition permet de limiter les efforts exercés sur le moyeu d'entraînement.

Ces objets sont atteints également avec un dispositif de préparation d'aliments comportant un élément de boîtier, un outil de travail rotatif mobile en rotation autour d'un axe de rotation Δ, un couvercle, et des moyens d'entraînement en rotation de l'outil de travail rotatif, l'élément de boîtier comprenant un fond pourvu d'un siège de réception de l'outil de travail rotatif, l'élément de boîtier délimitant en partie une chambre de travail ouverte à l'opposé du fond, le couvercle étant adapté pour fermer en partie au moins la chambre de travail, le couvercle comprenant une goulotte d'introduction des aliments à découper, du fait que le moyeu d'entraînement comprend une fenêtre d'entraînement ménageant un passage selon la direction de l'axe de rotation Δ, que la fenêtre d'entraînement présente en coupe transversale par rapport à l'axe de rotation Δ une plus petite dimension, et que les moyens d'entraînement comprennent : un arbre d'entraînement d'axe de rotation Δ qui est solidaire de l'élément de boîtier, qui possède une tête d'entraînement s'étendant dans la chambre de travail et présentant, en coupe transversale, une plus grande dimension strictement inférieure à la plus petite dimension de la fenêtre d'entraînement, une douille d'entraînement qui est libre en rotation selon l'axe de rotation Δ par rapport au couvercle et liée en translation axiale au couvercle, qui comprend un alésage d'entraînement axial de forme complémentaire à celle de la tête d'entraînement et adapté pour s'engager sur ladite tête d'entraînement en translation axiale et qui possède une forme extérieure complémentaire de celle de la fenêtre d'entraînement et adaptée pour s'engager dans ladite fenêtre d'entraînement en translation axiale.
Ces dispositions permettent de réaliser un dispositif de préparation d'aliments autorisant une transmission efficace des efforts, tout en limitant l'encombrement selon la direction de l'axe de rotation Δ.

Avantageusement alors, la tête d'entraînement possède une forme cannelée. Une telle disposition permet de faciliter la mise en place de l'outil de travail rotatif et de la douille d'entraînement portée par le couvercle.

Avantageusement encore, l'élément de boîtier comprend un conduit d'évacuation des aliments découpés qui s'étend à l'extérieur de la chambre de travail à l'opposé de la goulotte. Cette disposition permet de simplifier l'utilisation du dispositif de préparation d'aliments.

Avantageusement encore, la goulotte s'étend selon une direction longitudinale sensiblement parallèle à l'axe de rotation Δ. Cette disposition permet de faciliter le travail des aliments introduits dans la goulotte.

Selon un mode de réalisation, l'élément de boîtier présente une fenêtre de coupe agencée en regard de la goulotte, et un outil de coupe secondaire agencé dans la fenêtre de coupe est utilisé avec un outil de coupe primaire disposé dans la chambre de travail et entraîné par la forme extérieure de la douille d'entraînement du couvercle, l'outil de coupe primaire comprenant au moins une arrête de coupe principale qui est située dans un plan de coupe sensiblement perpendiculaire à l'axe de rotation Δ, et un biseau presseur qui est issu de l'arrête de coupe principale, qui est agencé du côté de l'outil de coupe secondaire disposé dans la fenêtre de coupe, et qui est incliné à partir de l'arrête de coupe principale dans une direction opposée au sens de rotation de l'outil de coupe primaire, de manière à presser les aliments tranchés contre l'outil de coupe secondaire disposé dans la fenêtre de coupe. L'outil de coupe secondaire peut être fixe ou amovible par rapport à la fenêtre de coupe. Une telle disposition permet notamment de réaliser des découpes en cubes ou en bâtonnets.

Avantageusement alors, l'outil de coupe secondaire comprend au moins un organe de coupe qui est situé en regard de la goulotte et qui possède au moins une arrête de coupe orientée vers la goulotte. Cette disposition permet de fendre la tranche découpée par l'arête de coupe principale.

Selon une forme de réalisation, l'outil de coupe secondaire comprend une première série d'organes de coupe sensiblement parallèles entre eux. Une telle disposition permet de découper des bâtonnets de section carrée ou rectangulaire.

Selon une autre forme de réalisation, l'outil de coupe secondaire comprend en outre une deuxième série d'organes de coupe sensiblement parallèles entre eux, la deuxième série d'organes de coupe définissant, avec la première série d'organes de coupe, une grille de découpe. Une telle disposition permet de découper des cubes et/ou des parallélépipèdes.

Avantageusement encore, l'une des bordures périphériques et la portion annulaire reposent sur le fond lorsque l'outil de travail rotatif est en place dans la chambre de travail. Cette disposition permet de limiter les efforts exercés sur le corps principal et sur le moyeu d'entraînement.

Avantageusement encore, le dispositif de préparation d'aliments comporte un réceptacle pouvant être intercalé entre le couvercle et l'élément de boîtier pour recevoir l'outil de travail rotatif en configuration de rangement. Une telle disposition permet d'obtenir un dispositif de préparation d'aliments présentant une configuration de rangement particulièrement compacte.

Selon un mode de réalisation, le dispositif de préparation d'aliments comprend un carter qui est situé sous l'élément de boîtier, et le carter comprend des moyens de verrouillage coopérant avec le couvercle. Une telle disposition permet de simplifier la construction de l'élément de boîtier et contribue à faciliter son nettoyage.

Avantageusement alors, le couvercle est verrouillé par baïonnette avec le carter. Une telle construction est simple à utiliser, économique à réaliser, et robuste.

Ces objets sont atteints également avec un appareil électroménager de préparation culinaire comportant un boîtier motorisé entraînant en rotation un outil de travail rotatif appartenant à un dispositif de préparation d'aliments, du fait que le dispositif de préparation d'aliments est conforme à l'une au moins des caractéristiques précitées.

Selon un mode de réalisation, le boîtier motorisé porte le dispositif de préparation d'aliments. En alternative, le boîtier motorisé pourrait être monté sur le dispositif de préparation d'aliments.

L'invention sera mieux comprise à l'étude d'un exemple de réalisation, pris à titre nullement limitatif, illustré dans les figures annexées, dans lesquelles :
- la figure 1 est une vue en perspective et en éclaté d'un exemple de réalisation d'un dispositif de préparation d'aliments utilisant un outil de travail rotatif selon l'invention,
- les figures 2 et 3 sont respectivement une vue en perspective de dessous et une vue en perspective de dessus de l'outil de travail rotatif selon l'invention illustré sur la figure 1,
- la figure 4 est une vue latérale en coupe de l'outil de travail rotatif selon l'invention illustré sur les figures 1 à 3, selon un plan perpendiculaire à l'axe de rotation,
- la figure 5 est une vue latérale en coupe du dispositif de préparation d'aliments illustré sur la figure 1, selon un plan perpendiculaire à l'axe de rotation, dans une configuration de fonctionnement utilisant l'outil de travail rotatif selon l'invention illustré sur les figures 1 à 4 ;
- la figure 6 est une vue agrandie d'une partie de la figure 5,
- la figure 7 est une vue latérale en coupe du dispositif de préparation d'aliments illustré sur la figure 1, selon un plan perpendiculaire à l'axe de rotation, dans une configuration de rangement utilisant l'outil de travail rotatif selon l'invention illustré sur les figures 1 à 6 ainsi qu'un autre outil de travail rotatif,
- la figure 8 est une vue latérale en élévation d'un appareil électroménager de préparation culinaire comportant le dispositif de préparation d'aliments illustré sur la figure 1 dans la configuration de fonctionnement illustrée sur la figure 5.

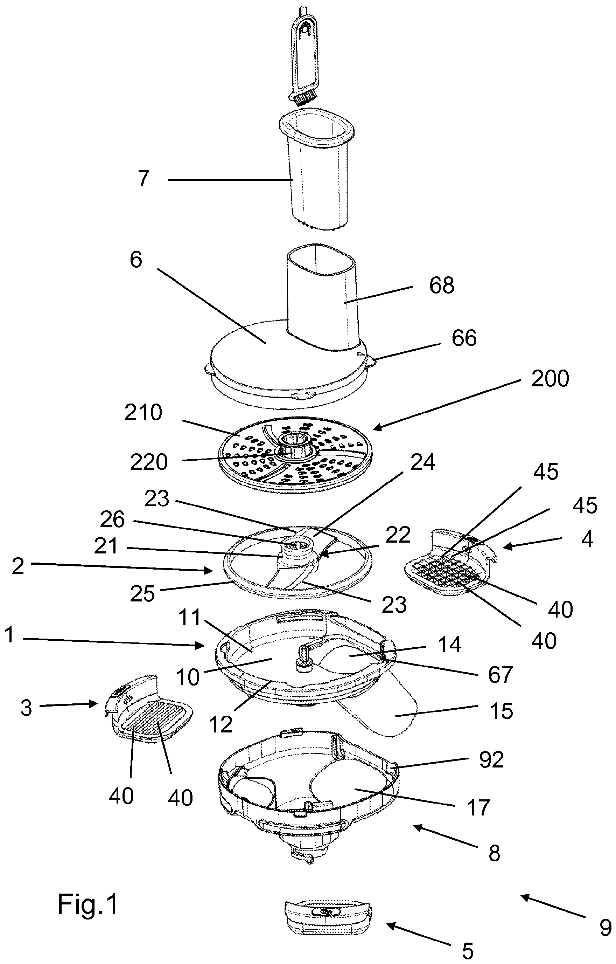

Le dispositif de préparation d'aliments 9 illustré sur la figure 1 comporte un carter 8, un élément de boîtier 1, un outil de coupe primaire 2 rotatif, trois outils de coupe secondaire 3, 4, 5 fixes interchangeables, un outil de travail rotatif 200 réversible, un réceptacle 300 de rangement pouvant loger l'outil de travail rotatif 200, un couvercle 6, et un poussoir 7. Chaque composant principal peut résulter de l'assemblage de différents éléments, et les composants principaux peuvent en outre être séparés de manière à permettre un nettoyage aisé.

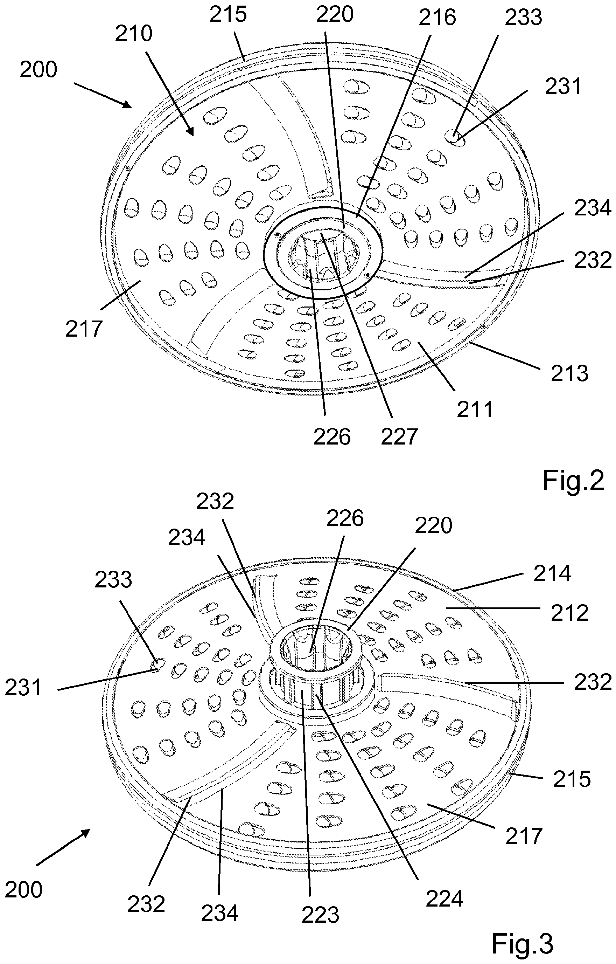

Tel que mieux visible sur les figures 2 à 4, l'outil de travail rotatif 200 réversible comprend un moyeu d'entraînement 220 selon un axe de rotation Δ et un corps principal 210 s'étendant autour du moyeu d'entraînement 220. Le corps principal 210 est entraîné en rotation par le moyeu d'entraînement 220 selon l'axe de rotation Δ.

Le corps principal 210 présente deux faces 211, 212 opposées. Chaque face 211, 212 présente une bordure périphérique 213, 214 et au moins un organe de travail 231, 232 agencé entre le moyeu d'entraînement 220 et la bordure périphérique 213, 214. Plus particulièrement dans l'exemple de réalisation illustré sur les figures, la face 211 comporte une pluralité d'organes de travail 231 pour râper ou effiler les aliments, et la face 212 comporte trois organes de travail 232 de type lame pour trancher les aliments. Les organes de travail 231, 232 sont chacun adjacents à un passage traversant 233, 234.

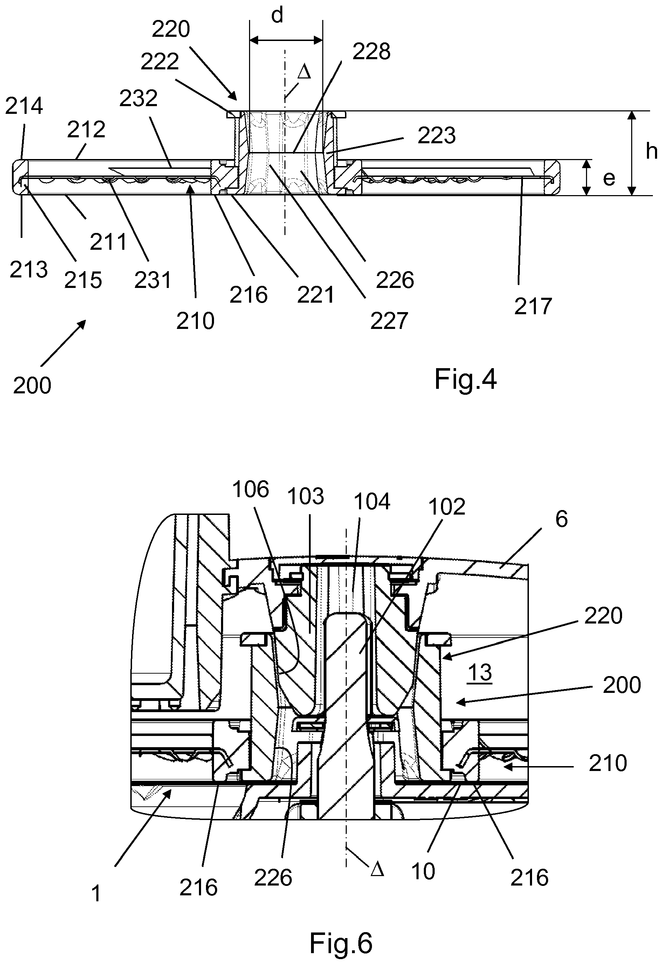

Tel que bien visible sur la figure 4, le moyeu d'entraînement 220 présente selon l'axe de rotation Δ une hauteur h supérieure à une épaisseur e du corps principal 210 selon l'axe de rotation Δ. Le moyeu d'entraînement 220 est monté mobile en translation par rapport au corps principal 210 selon la direction de l'axe de rotation Δ, de sorte que l'outil de travail rotatif 200 puisse reposer sur l'une ou l'autre des bordures périphériques 213, 214.

Dans l'exemple de réalisation illustré sur les figures, le moyeu d'entraînement 220 comprend une fenêtre d'entraînement 226 ménageant un passage 227 selon la direction de l'axe de rotation Δ. La fenêtre d'entraînement 226 présente en coupe transversale par rapport à l'axe de rotation Δ une plus petite dimension d. Selon une forme de réalisation préférée, la plus petite dimension d de la fenêtre d'entraînement 226 est formée par une restriction médiane 228 selon la direction de l'axe de rotation Δ. En d'autres termes, la restriction médiane 228 s'étend à mi-distance des deux extrémités de la fenêtre d'entraînement 226. De manière préférée, la fenêtre d'entraînement 226 présente une section croissante selon l'axe de rotation Δ de part et d'autre de la plus petite dimension d.

Dans l'exemple de réalisation illustré sur les figures, le moyeu d'entraînement 220 possède une forme cannelée, tel que bien visible sur les figures 2 et 3.

Selon une forme de réalisation, le moyeu d'entraînement 220 est solidaire du corps principal 210. Tel que visible sur la figure 4, le moyeu d'entraînement 220 comporte des butées 221, 222 limitant la course du corps principal 210. Si désiré au moins une des butées 222 peut être rapportée sur un corps tubulaire 223 formant la fenêtre d'entraînement 226. Le corps tubulaire 223 comporte des cannelures externes 224, mieux visibles sur la figure 3, pour le guidage en translation du corps principal 210 par rapport au moyeu d'entraînement 220. Les cannelures externes 224 servent également à l'entraînement en rotation du corps principal 210.

Dans l'exemple de réalisation illustré sur les figures, les organes de travail 231, 232 sont agencés entre une portion périphérique 215 du corps principal 210 portant les bordures périphériques 213, 214 et une portion annulaire 216 du corps principal 210 montée coulissante avec le moyeu d'entraînement 220. Selon une forme de réalisation préférée, les organes de travail 231, 232 sont formés sur une pièce intermédiaire 217 métallique.

De préférence l'épaisseur e du corps principal 210 correspond à la fois à l'épaisseur de la portion périphérique 215 et à l'épaisseur de la portion annulaire 216.

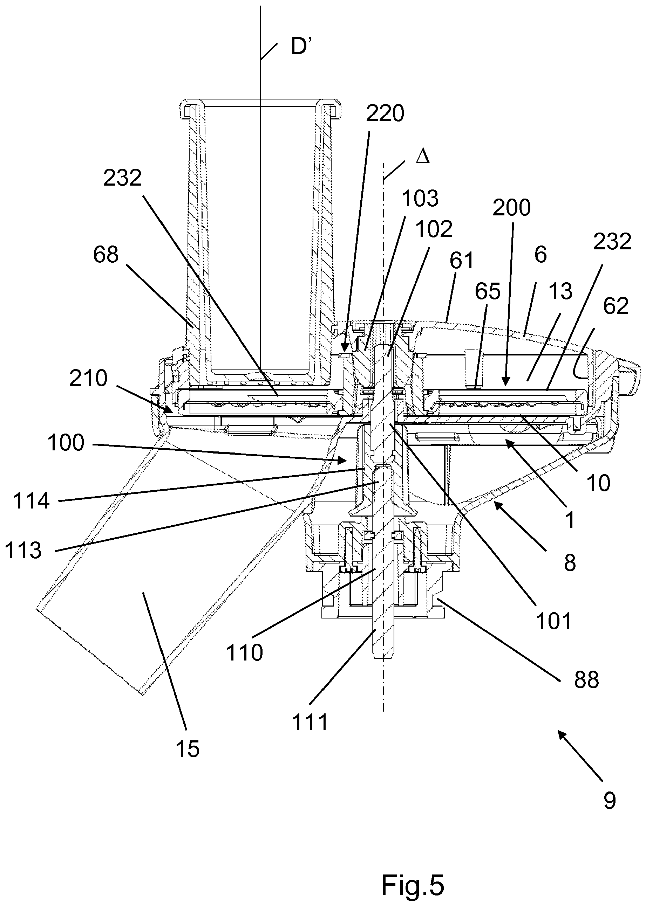

L'outil de travail rotatif 200 réversible peut être monté sur l'élément de boîtier 1 du dispositif de préparation d'aliments 9, tel que représenté sur les figures 5 et 6. A cet effet l'élément de boîtier 1 comprend un fond 10 pourvu d'un siège de réception 11 de l'outil de travail rotatif 200. Le fond 10 est entouré par un rebord périphérique 12. L'élément de boîtier 1 délimite ainsi en partie une chambre de travail 13 ouverte à l'opposé du fond 10. Dans l'exemple de réalisation illustré aux figures, la chambre de travail 13 possède avantageusement une forme générale sensiblement cylindrique de révolution selon l'axe de rotation Δ perpendiculaire au fond 10. L'outil de travail rotatif 200 est mobile en rotation dans la chambre de travail 13 selon l'axe de rotation Δ.

Tel que visible sur la figure 5, l'une 213 des bordures périphériques 213, 214 repose sur le fond 10 lorsque l'outil de travail rotatif 200 est en place dans la chambre de travail 13. Tel que mieux visible sur la figure 6, la portion annulaire 216 repose sur le fond 10 lorsque l'outil de travail rotatif 200 est en place dans la chambre de travail 13.

Le couvercle 6 est adapté de manière amovible sur l'élément de boîtier 1 pour fermer en partie au moins la chambre de travail 13. À cet effet, le couvercle 6 comprend un toit 61 qui est bordé sur sa face inférieure par une jupe périphérique 62 qui possède une face extérieure sensiblement cylindrique de révolution selon l'axe de rotation Δ et de forme complémentaire à celle du rebord périphérique 12. Lors de la mise en place du couvercle 6 dans l'élément de boîtier 1, la jupe périphérique 62 est destinée à venir s'insérer, au niveau de sa partie basse, entre la portion périphérique 215 de l'outil de travail rotatif 200 et le rebord périphérique 12, de manière à centrer l'outil de travail rotatif 200. Ainsi, la jupe périphérique 62 possède une face inférieure également sensiblement cylindrique de révolution selon l'axe de rotation Δ.

Le couvercle 6 comprend une goulotte 68 d'introduction des aliments à découper. Tel que visible sur la figure 5, la goulotte 68 s'étend selon une direction longitudinale D' sensiblement parallèle à l'axe de rotation Δ. Il est à noter que dans le cas présent l'extrémité inférieure de la goulotte 68 s'étend en dessous du toit 61 de manière à guider les aliments à découper au plus près du corps principal 210 de l'outil de travail rotatif 200.

Afin d'éviter que l'outil de travail rotatif 200 ne se soulève lorsqu'il travaille, le couvercle 6 comprend également trois pions 65 destinés à venir en appui sur la bordure périphérique 213 ou 214 s'étendant à l'opposé du fond 10.

Le couvercle 6 est mobile sur ou dans l'élément de boîtier 1 entre une position déverrouillée dans laquelle il peut être retiré de l'élément de boîtier 1 selon un mouvement de translation parallèle à l'axe de rotation Δ et une position verrouillée plus particulièrement illustrée à la figure 5 dans laquelle il ne peut pas être désolidarisé de l'élément de boîtier 1. Afin de permettre cette immobilisation du couvercle 6 sur l'élément de boîtier 1, il est mis en oeuvre un système de verrouillage à baïonnette qui comprend quatre languettes 66 portées par la face extérieure de la jupe périphérique 62 et destinées à venir s'engager dans quatre fenêtres d'introduction 67 de l'élément de boîtier 1.

L'élément de boîtier 1 comprend un conduit 15 d'évacuation des aliments découpés qui s'étend à l'extérieur de la chambre de travail 13 à l'opposé de la goulotte 68.

Le carter 8 est situé sous l'élément de boîtier 1. Le carter 8 porte l'élément de boîtier 1 et présente une fenêtre de passage 17 pour le passage du conduit 15. Le carter 8 comprend des moyens de verrouillage coopérant avec le couvercle 6. Plus particulièrement dans l'exemple de réalisation illustré sur les figures, le couvercle 6 est verrouillé par baïonnette avec le carter 8. Dans l'exemple de réalisation illustré sur les figures, le carter 8 comporte quatre pattes de verrouillage 92. Les languettes 66 du couvercle 6 viennent se placer en position verrouillée sous les pattes de verrouillage 92 du carter 8. Ainsi l'élément de boîtier 1 se trouve parfaitement immobilisé entre le couvercle 6 et le carter 8. Le couvercle 6 en position verrouillée vient en prise avec le carter 8.

Le dispositif de préparation d'aliments 9 comporte des moyens d'entraînement 100 en rotation de l'outil de travail rotatif 200 dans la chambre de travail 13.

Les moyens d'entraînement 100 comprennent un arbre d'entraînement 101 d'axe de rotation Δ qui est solidaire de l'élément de boîtier 1. L'arbre d'entraînement 101 possède une tête d'entraînement 102 qui s'étend dans la chambre de travail 13. La tête d'entraînement 102 présente, en coupe transversale, une plus grande dimension strictement inférieure à la plus petite dimension d de la fenêtre d'entraînement 226. Ainsi l'arbre d'entraînement 101 ne peut entraîner directement l'outil de coupe primaire 2. Dans l'exemple de réalisation illustré sur les figures, la tête d'entraînement 102 possède une forme cannelée.

Afin d'assurer une liaison en rotation du moyeu d'entraînement 220 et de l'arbre d'entraînement 101, les moyens d'entraînement 100 comprennent en outre une douille d'entraînement 103 qui est libre en rotation selon l'axe de rotation Δ par rapport au couvercle 6 et liée en translation axiale au couvercle 6. La douille d'entraînement 103 est adaptée pour lier en rotation la tête d'entraînement 102 et l'outil de travail rotatif 200 lorsque le couvercle 6 est placé sur ou dans l'élément de boîtier 1. A cet effet, la douille d'entraînement 103 comprend un alésage d'entraînement 104 axial de forme complémentaire à celle de la tête d'entraînement 102. L'alésage d'entraînement 104 est adapté pour s'engager sur la tête d'entraînement 102 en translation axiale. L'alésage d'entraînement 104 possède une forme extérieure 106 complémentaire de celle de la fenêtre d'entraînement 226. La forme extérieure 106 est adaptée pour s'engager dans la fenêtre d'entraînement 226 en translation axiale.

Les moyens d'entraînement 100 comprennent en outre un arbre intermédiaire 110 d'axe de rotation Δ qui est solidaire du carter 8 en étant lié en translation à ce dernier et libre en rotation selon l'axe de rotation Δ par rapport à celui-ci. L'arbre intermédiaire 110 comprend un pied d'entraînement 111 qui s'étend à l'extérieur d'une embase 88 du carter 8. Le pied d'entraînement 111 est destiné à coopérer avec un arbre de sortie d'un boîtier d'entraînement motorisé. L'arbre intermédiaire 110 comprend, à l'opposé du pied d'entraînement 111, une tête d'accouplement 113 qui est située à l'intérieur du carter 8 et qui est destinée à coopérer avec un pied d'accouplement 114 porté par l'arbre d'entraînement 101.

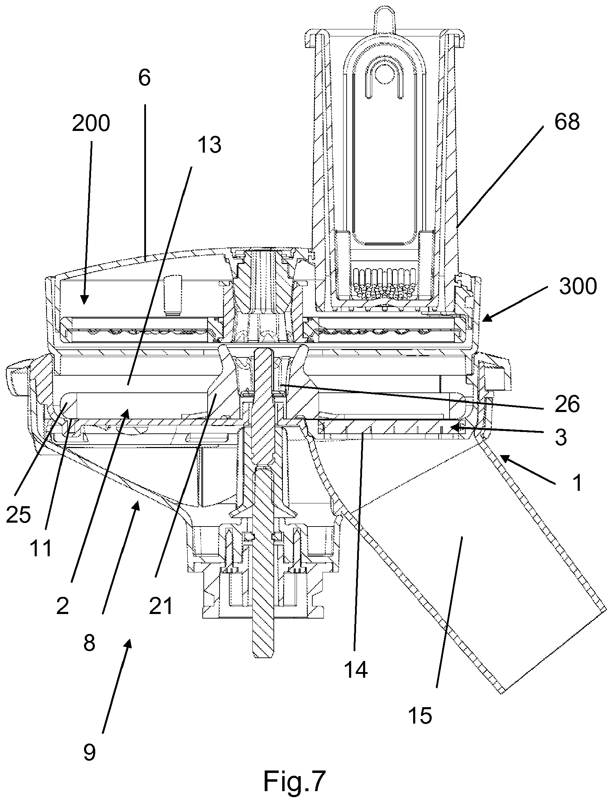

Le dispositif de préparation d'aliments 9 illustré sur les figures peut également utiliser l'outil de coupe primaire 2 à la place de l'outil de travail rotatif 200 réversible. La figure 7 illustre l'outil de coupe primaire 2 en place sur l'élément de boîtier 1.

L'outil de coupe primaire 2 comprend au moins une arrête de coupe principale 23 et un biseau presseur 24. L'arrête de coupe principale 23 est située dans un plan de coupe sensiblement perpendiculaire à l'axe de rotation Δ. Le biseau presseur 24 est issu de l'arrête de coupe principale 23. Dans l'exemple de réalisation illustré sur la figure 1, l'outil de coupe primaire 2 comprend un moyeu d'entraînement 21 à partir duquel s'étendent deux lames 22 qui comprennent chacune une arrête de coupe principale 23. L'outil de coupe primaire 2 comprend également un anneau périphérique 25 qui est destiné à venir en appui contre le siège de réception 11 formé par le bord périphérique 12 extérieur du fond 10. Le moyeu d'entraînement 21 comprend en outre une fenêtre d'entraînement 26.

L'élément de boîtier 1 présente une fenêtre de coupe 14 agencée en regard de la goulotte 68, pour recevoir l'un des outils de coupe secondaire 3 ; 4 ; 5. Tel que visible sur la figure 7, l'un 3 des outils de coupe secondaire 3 ; 4 ; 5 est agencé dans la fenêtre de coupe 14. Le biseau presseur 24 est agencé du côté de l'outil de coupe secondaire 3 ; 4 ; 5 disposé dans la fenêtre de coupe 14. Le biseau presseur 24 est incliné à partir de l'arrête de coupe principale 23 dans une direction opposée au sens de rotation de l'outil de coupe primaire 2, de manière à presser les aliments tranchés contre l'outil de coupe secondaire 3 ; 4 ; 5 disposé dans la fenêtre de coupe 14.

Les outils de coupe secondaire 3, 4, 5 sont interchangeables. L'un des outils de coupe secondaire 3 ; 4 ; 5 peut être agencé dans la fenêtre de coupe 14 pour être utilisé avec l'outil de coupe primaire 2 disposé dans la chambre de travail 13 et entraîné par la forme extérieure 106 de la douille d'entraînement 103 du couvercle 6. Chaque outil de coupe secondaire 3 ; 4 ; 5 comprend au moins un organe de coupe 40 qui est situé en regard de la goulotte 68 et qui possède au moins une arrête de coupe orientée vers la goulotte 68. Dans l'exemple de réalisation illustré sur les figures, les outils de coupe secondaire 3 ; 4 ; 5 comprennent une première série d'organes de coupe 40 sensiblement parallèles entre eux. Certains 4, 5 des outils de coupe secondaire 3 ; 4 ; 5 comprennent une deuxième série d'organes de coupe 45 sensiblement parallèles entre eux, la deuxième série d'organes de coupe 45 définissant, avec la première série d'organes de coupe 40, une grille de découpe. Ainsi le premier outil de coupe secondaire 3 permet de réaliser une découpe d'aliments en bâtonnets lorsqu'il est utilisé avec l'outil de coupe primaire 2. Ainsi, les deuxième et troisième outils de coupe secondaire 4 et 5 permettent de réaliser des découpes en cubes lorsqu'ils sont utilisés avec l'outil de coupe primaire 2.

Tel que représenté sur la figure 7, le réceptacle 300 peut être intercalé entre le couvercle 6 et l'élément de boîtier 1 pour recevoir l'outil de travail rotatif 200 en configuration de rangement. L'outil de coupe primaire 2 peut rester logé dans la chambre de travail 13. Selon une forme de réalisation préférée illustrée sur la figure 6, le couvercle 6 est alors verrouillé sur le réceptacle 300 et le réceptacle 300 est verrouillé sur le carter 8.

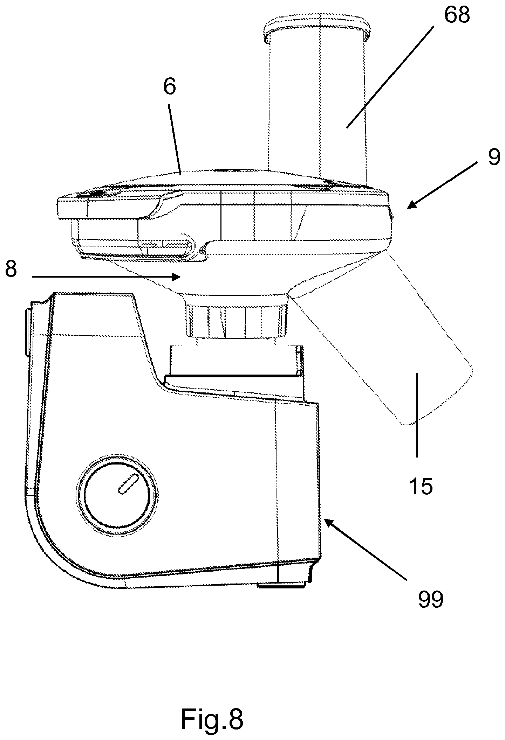

La figure 8 illustre un appareil électroménager de préparation culinaire comportant un boîtier motorisé 99 et le dispositif de préparation d'aliments 9. Le boîtier motorisé 99 porte le dispositif de préparation d'aliments 9. Le boîtier motorisé 99 présente un arbre de sortie vertical. Le boîtier motorisé 99 entraîne ainsi en rotation un outil de travail rotatif 200 (non visible sur la figure 8) utilisé dans le dispositif de préparation d'aliments 9.

L'outil de travail rotatif 200 réversible selon l'invention s'utilise et fonctionne de la manière suivante.

L'utilisateur dispose par exemple l'outil de travail rotatif 200 réversible dans l'élément de boîtier 1 avec les organes de travail 232 agencés à l'opposé du fond 10, tel que représenté sur la figure 5. Le moyeu d'entraînement 220 monté mobile en translation par rapport au corps principal 210 est repoussé par le fond 10 lorsque l'outil de travail rotatif 200 réversible est disposé sur l'élément de boîtier 1. La portion périphérique 215 et la portion annulaire 216 reposent sur le fond 10 lorsque l'outil de travail rotatif 200 disposé sur l'élément de boîtier 1 est en place dans la chambre de travail 13. L'utilisateur met ensuite en place le couvercle 6 et met en marche le dispositif de préparation d'aliments 9 monté par exemple sur le boîtier motorisé 99. Ainsi les aliments introduits par la goulotte 68 viennent en appui sur le corps principal 210 supporté par la portion périphérique 215 et la portion annulaire 216. Les efforts exercés sur le moyeu d'entraînement 220 sont minimisés. L'outil de travail rotatif 200 réversible présente une construction compacte qui permet de limiter la hauteur axiale du moyeu d'entraînement 220 tout en permettant une transmission satisfaisante des efforts lors de l'entraînement du moyeu d'entraînement 220. Tel que visible sur la figure 5, la base de la goulotte 68 ménage avec le fond 10 un espace libre présentant une hauteur supérieure à l'épaisseur e du corps principal 210 mais inférieure à la hauteur h du moyeu d'entraînement 220, visibles sur la figure 4. Le corps principal 210 s'étend entre le fond 10 et la base de la goulotte 68. Le moyeu d'entraînement 220 s'étend au dessus du fond 10 à distance de la goulotte 68. Une construction compacte peut ainsi être obtenue.

Pour utiliser l'outil de travail rotatif 200 réversible avec les organes de travail 231, l'utilisateur retourne l'outil de travail rotatif 200 réversible. Le moyeu d'entraînement 220 monté flottant par rapport au corps principal 210 est repoussé par le fond 10 lorsque l'outil de travail rotatif 200 réversible est disposé sur l'élément de boîtier 1. L'outil de travail rotatif 200 réversible présente une construction simple et économique et permet de limiter l'encombrement en hauteur du dispositif de préparation d'aliments dans lequel l'outil de travail rotatif 200 réversible est utilisé.

A titre de variante, l'outil de travail rotatif 200 réversible peut comporter au moins un organe de travail 231, 232 par face 211, 212.

A titre de variante, les organes de travail 231, 232 ne sont pas nécessairement adjacents à un passage traversant. Si désiré, certains organes de travail peuvent notamment être formés par des protubérances rugueuses prévues pour râper des aliments friables.

A titre de variante, l'outil de travail rotatif 200 réversible n'est pas nécessairement utilisé avec un dispositif de préparation d'aliments 9. Le moyeu d'entraînement 220 ne comprend pas nécessairement une fenêtre d'entraînement 226 ménageant un passage 227 selon la direction de l'axe de rotation Δ. Le moyeu d'entraînement 220 peut notamment comporter deux organes d'entraînement disposés de part et d'autre d'une paroi du moyeu d'entraînement 220.

A titre de variante, l'élément de boîtier 1 n'est pas nécessairement verrouillé avec le couvercle 6 lorsque le carter 8 est verrouillé avec le couvercle 6.

A titre de variante, le couvercle 6 n'est pas nécessairement verrouillé par baïonnette avec le carter 8. Le couvercle 6 peut notamment être assemblé avec le carter 8 par vissage, par au moins une bride ou par au moins un crochet.

A titre de variante, le couvercle 6 n'est pas nécessairement amovible par rapport à l'élément de boîtier 1 et au carter 8. Le couvercle 6 peut notamment être monté pivotant sur l'élément de boîtier 1 ou sur le carter 8.

A titre de variante, le carter 8 ne comprend pas nécessairement des moyens de verrouillage coopérant avec le couvercle 6. Le carter 8 peut notamment comprendre des moyens de verrouillage coopérant avec l'élément de boîtier 1, l'élément de boîtier 1 comportant d'autres moyens de verrouillage coopérant avec le couvercle 6.

A titre de variante, le dispositif de préparation d'aliments 9 ne comporte pas nécessairement un carter 8. L'élément de boîtier 1 peut notamment présenter une embase d'adaptation sur un boîtier motorisé.

A titre de variante, le moyeu d'entraînement 220 monté mobile par rapport au corps principal 210 selon la direction de l'axe de rotation Δ n'est pas nécessairement guidé en translation rectiligne par rapport au corps principal 210 selon la direction de l'axe de rotation Δ. Notamment, les cannelures externes 224 ne s'étendent pas nécessairement selon la direction de l'axe de rotation Δ. Si désiré, les cannelures externes 224 peuvent par exemple être inclinées par rapport à l'axe de rotation Δ, pour permettre un mouvement hélicoïdal du moyeu d'entraînement 220 par rapport au corps principal 210.

La présente invention n'est nullement limitée aux exemples de réalisation décrits, mais englobe de nombreuses modifications dans le cadre des revendications.

## Revendications

1. Outil de travail rotatif (200) réversible comprenant un moyeu d'entraînement (220) selon un axe de rotation (Δ) et un corps principal (210) entraîné en rotation par le moyeu d'entraînement (220) selon l'axe de rotation (Δ), le corps principal (210) s'étendant autour du moyeu d'entraînement (220), le corps principal (210) présentant deux faces (211, 212) opposées présentant chacune une bordure périphérique (213, 214) et au moins un organe de travail (231, 232) agencé entre le moyeu d'entraînement (220) et la bordure périphérique (213, 214), le moyeu d'entraînement (220) présentant selon l'axe de rotation (Δ) une hauteur (h) supérieure à une épaisseur (e) du corps principal (210) selon l'axe de rotation (Δ), **caractérisé en ce que** le moyeu d'entraînement (220) est monté mobile par rapport au corps principal (210) selon la direction de l'axe de rotation (Δ).

2. Outil de travail rotatif (200) selon la revendication 1, **caractérisé en ce que** le moyeu d'entraînement (220) comprend une fenêtre d'entraînement (226) ménageant un passage (227) selon la direction de l'axe de rotation (Δ).

3. Outil de travail rotatif (200) selon la revendication 2, **caractérisé en ce que** la plus petite dimension (d) de la fenêtre d'entraînement (226) est formée par une restriction médiane (228) selon la direction de l'axe de rotation (Δ).

4. Outil de travail rotatif (200) selon l'une des revendications 2 ou 3, **caractérisé en ce que** la fenêtre d'entraînement (226) présente une section croissante selon l'axe de rotation (Δ) de part et d'autre de la plus petite dimension (d).

5. Outil de travail rotatif (200) selon l'une des revendications 1 à 4, **caractérisé en ce que** le moyeu d'entraînement (220) possède une forme cannelée.

6. Outil de travail rotatif (200) selon l'une des revendications 1 à 5, **caractérisé en ce que** le moyeu d'entraînement (220) est solidaire du corps principal (210).

7. Outil de travail rotatif (200) selon l'une des revendications 1 à 6, **caractérisé en ce que** le ou les organes de travail (231, 232) est/sont agencé(s) entre une portion périphérique (215) du corps principal (210) portant les bordures périphériques (213, 214) et une portion annulaire (216) du corps principal (210) montée coulissante avec le moyeu d'entraînement (220).

8. Dispositif de préparation d'aliments (9) comportant un élément de boîtier (1), un outil de travail rotatif (200) mobile en rotation autour d'un axe de rotation (Δ), un couvercle (6), et des moyens d'entraînement (100) en rotation de l'outil de travail rotatif (200), l'élément de boîtier (1) comprenant un fond (10) pourvu d'un siège de réception (11) de l'outil de travail rotatif (200), l'élément de boîtier (1) délimitant en partie une chambre de travail (13) ouverte à l'opposé du fond (10), le couvercle (6) étant adapté pour fermer en partie au moins la chambre de travail (13), le couvercle (6) comprenant une goulotte (68) d'introduction des aliments à découper, **caractérisé en ce que** l'outil de travail rotatif (200) est conforme à l'une des revendications 2 à 4 ou l'une des revendications 5 à 7 lorsque dépendant de l'une des revendications 2 à 4, **en ce que** la fenêtre d'entraînement (226) présente en coupe transversale par rapport à l'axe de rotation (Δ) une plus petite dimension (d), et **en ce que** les moyens d'entraînement (100) comprennent :
- un arbre d'entraînement (101) d'axe de rotation (Δ) qui est solidaire de l'élément de boîtier (1), qui possède une tête d'entraînement (102) s'étendant dans la chambre de travail (13) et présentant, en coupe transversale, une plus grande dimension strictement inférieure à la plus petite dimension (d) de la fenêtre d'entraînement (226),
- une douille d'entraînement (103) qui est libre en rotation selon l'axe de rotation (Δ) par rapport au couvercle (6) et liée en translation axiale au couvercle (6), qui comprend un alésage d'entraînement (104) axial de forme complémentaire à celle de la tête d'entraînement (102) et adapté pour s'engager sur ladite tête d'entraînement (102) en translation axiale et qui possède une forme extérieure (106) complémentaire de celle de la fenêtre d'entraînement (226) et adaptée pour s'engager dans ladite fenêtre d'entraînement (226) en translation axiale.

9. Dispositif de préparation d'aliments (9) selon la revendication 8, **caractérisé en ce que** la tête d'entraînement (102) possède une forme cannelée.

10. Dispositif de préparation d'aliments (9) selon l'une des revendications 8 ou 9, **caractérisé en ce que** la goulotte (68) s'étend selon une direction longitudinale (D') sensiblement parallèle à l'axe de rotation (Δ).

11. Dispositif de préparation d'aliments (9) selon l'une des revendications 8 à 10, **caractérisé en ce que** l'élément de boîtier (1) présente une fenêtre de coupe (14) agencée en regard de la goulotte (68), et **en ce qu'**un outil de coupe secondaire (3 ; 4 ; 5) agencé dans la fenêtre de coupe (14) est utilisé avec un outil de coupe primaire (2) disposé dans la chambre de travail (13) et entraîné par la forme extérieure (106) de la douille d'entraînement (103) du couvercle (6), l'outil de coupe primaire (2) comprenant au moins une arrête de coupe principale (23) qui est située dans un plan de coupe sensiblement perpendiculaire à l'axe de rotation (Δ), et un biseau presseur (24) qui est issu de l'arrête de coupe principale (23), qui est agencé du côté de l'outil de coupe secondaire (3 ; 4 ; 5) disposé dans la fenêtre de coupe (14), et qui est incliné à partir de l'arrête de coupe principale (23) dans une direction opposée au sens de rotation de l'outil de coupe primaire (2), de manière à presser les aliments tranchés contre l'outil de coupe secondaire (3 ; 4 ; 5) disposé dans la fenêtre de coupe (14).

12. Dispositif de préparation d'aliments (9) selon l'une des revendications 8 à 11 lorsque dépendant de la revendication 7, **caractérisé en ce que** l'une (213) des bordures périphériques (213, 214) et la portion annulaire (216) reposent sur le fond (10) lorsque l'outil de travail rotatif (200) est en place dans la chambre de travail (13).

13. Dispositif de préparation d'aliments (9) selon l'une des revendications 8 à 12, **caractérisé en ce qu'**il comporte un réceptacle (300) pouvant être intercalé entre le couvercle (6) et l'élément de boîtier (1) pour recevoir l'outil de travail rotatif (200) en configuration de rangement.

14. Appareil électroménager de préparation culinaire comportant un boîtier motorisé (99) entraînant en rotation un outil de travail rotatif (200) appartenant à un dispositif de préparation d'aliments (9), **caractérisé en ce que** le dispositif de préparation d'aliments (9) est conforme à l'une des revendications 8 à 13.

15. Appareil électroménager de préparation culinaire selon la revendication 14, **caractérisé en ce que** le boîtier motorisé (99) porte le dispositif de préparation d'aliments (9).

## Patentansprüche

1. Reversibles Drehbearbeitungswerkzeug (200), das eine Antriebsnabe (220) entlang einer Rotationsachse (Δ) und einen Hauptkörper (210) umfasst, der durch die Antriebsnabe (220) um die Rotationsachse (Δ) angetrieben wird, wobei sich der Hauptkörper (210) um die Antriebsnabe (220) erstreckt, wobei der Hauptkörper (210) zwei gegenüberliegende Flächen (211, 212) aufweist, die jeweils eine umlaufende Kante (213, 214) und mindestens ein Arbeitselement (231, 232) aufweisen, das zwischen der Antriebsnabe (220) und der umlaufenden Kante (213, 214) angeordnet ist,
wobei die Antriebsnabe (220) entlang der Drehachse (Δ) eine Höhe (h) aufweist, die größer als eine Dicke (e) des Hauptkörpers (210) entlang der Drehachse (Δ) ist,
**dadurch gekennzeichnet, dass** die Antriebsnabe (220) relativ zu dem Hauptkörper (210) in Richtung der Drehachse (Δ) bewegbar angebracht ist.

2. Drehbearbeitungswerkzeug (200) nach Anspruch 1, **dadurch gekennzeichnet, dass** die Antriebsnabe (220) ein Antriebsfenster (226) umfasst, in dem ein Durchgang (227) in Richtung der Drehachse (Δ) ausgebildet ist.

3. Drehbearbeitungswerkzeug (200) nach Anspruch 2, **dadurch gekennzeichnet, dass** die kleinste Abmessung (d) des Antriebsfensters (226) durch eine mittlere Begrenzung (228) in Richtung der Drehachse (Δ) gebildet ist.

4. Drehbearbeitungswerkzeug (200) nach einem der Ansprüche 2 oder 3, **dadurch gekennzeichnet, dass** das Antriebsfenster (226) auf jeder Seite einen von der kleinsten Abmessung (d) entlang der Drehachse (Δ) zunehmenden Querschnitt aufweist.

5. Drehbearbeitungswerkzeug (200) nach einem der Ansprüche 1 bis 4, **dadurch gekennzeichnet, dass** die Antriebsnabe (220) eine kannelierte Form besitzt.

6. Drehbearbeitungswerkzeug (200) nach einem der Ansprüche 1 bis 5, **dadurch gekennzeichnet, dass** die Antriebsnabe (220) einstückig mit dem Hauptkörper (210) ist.

7. Drehbearbeitungswerkzeug (200) nach einem der Ansprüche 1 bis 6, **dadurch gekennzeichnet, dass** das oder die Arbeitselement(e) (231, 232) zwischen einem Umfangsabschnitt (215) des Hauptkörpers (210), der die umlaufende Kante (213, 214) trägt, und einem ringförmigen Abschnitt (216) des Hauptkörpers (210) angeordnet ist/sind, der verschiebbar an der Antriebsnabe (220) angebracht ist.

8. Vorrichtung zur Zubereitung von Speisen (9), die ein Gehäuseelement (1), ein Drehbearbeitungswerkzeug (200), das um eine Drehachse (Δ) drehbar ist, eine Abdeckung (6) und Mittel (100) aufweist, um das Drehbearbeitungswerkzeug (200) in Drehung zu versetzen, wobei das Gehäuseelement (1) einen Boden (10) umfasst, der mit einem Aufnahmesitz (11) des Drehbearbeitungswerkzeugs (200) versehen ist, wobei das Gehäuseelement (1) teilweise eine Arbeitskammer (13) begrenzt, die gegenüber dem Boden (10) offen ist, wobei die Abdeckung (6) geeignet ist, zumindest die Arbeitskammer (13) teilweise zu schließen, wobei die Abdeckung (6) eine Rutsche (68) zum Einführen von zu schneidenden Lebensmitteln umfasst,
**dadurch gekennzeichnet, dass** das Drehbearbeitungswerkzeug (200) nach einem der Ansprüche 2 bis 4 oder einem der Ansprüche 5 bis 7 in Abhängigkeit von einem der Ansprüche 2 bis 4 ist, dass das Antriebsfenster (226) im Querschnitt relativ zu der Drehachse (Δ) eine kleinste Abmessung (d) aufweist, und dass die Antriebsmittel (100) umfassen:
- eine Antriebswelle (101) der Drehachse (Δ), die mit dem Element Gehäuse (1) fest verbunden ist, das einen Antriebskopf (102) besitzt, der sich in die Arbeitskammer (13) erstreckt und im Querschnitt eine größte Abmessung aufweist, die strikt kleiner als die kleinste Abmessung (d) des Antriebsfensters (226) ist,
- einer Antriebshülse (103), die um die Drehachse (Δ) relativ zu der Abdeckung (6) frei drehbar ist, und die in axialer Translation mit der Abdeckung (6) verbunden ist, die eine axiale Antriebsbohrung (104) von komplementärer Form zu derjenigen des Antriebskopfes (102) umfasst und angepasst ist, um in den Antriebskopf (102) in axialer Translation einzugreifen, und die eine äußere Form (106) besitzt, die komplementär zu derjenigen des Antriebsfensters (226) ist und angepasst ist, um in das Antriebsfenster (226) in axialer Translation einzugreifen.

9. Vorrichtung zur Zubereitung von Nahrungsmitteln (9) nach Anspruch 8, **dadurch gekennzeichnet, dass** der Antriebskopf (102) eine kannelierte Form besitzt.

10. Vorrichtung zur Zubereitung von Nahrungsmitteln (9) nach einem der Ansprüche 8 oder 9, **dadurch gekennzeichnet, dass** sich die Rutsche (68) in einer Längsrichtung (D') im Wesentlichen parallel zu der Drehachse (Δ) erstreckt.

11. Vorrichtung zur Zubereitung von Nahrungsmitteln (9) nach einem der Ansprüche 8 bis 10, **dadurch gekennzeichnet, dass** das Gehäuseelement (1) ein Schneidfenster (14) aufweist ,das gegenüber der Rutsche (68) angeordnet ist, und dass ein sekundäres Schneidwerkzeug (3; 4; 5), das in dem Schneidfenster (14) angeordnet ist, mit einem primären Schneidwerkzeug (2) verwendet wird, das in der Arbeitskammer (13) angeordnet ist und von der äußeren Form (106) der Antriebshülse (103) der Abdeckung (6) angetrieben wird, wobei das primäre Schneidwerkzeug (2) mindestens eine Hauptschneidkante (23), die sich in einer Schneidebene befindet, die im Wesentlichen senkrecht zu der Drehachse (Δ) ist, und einen Druckkeil (24) umfasst, der von der Hauptschneidkante (23) ausgeht, die auf der Seite des sekundären Schneidwerkzeuges (3; 4; 5) in dem Schneidfenster (14) angeordnet ist, und die ausgehend von der Hauptschneidkante (23) in einer Richtung geneigt ist, die entgegengesetzt zu der Drehrichtung des primären Schneidwerkzeugs (2) ist, um die geschnittenen Nahrungsmittel gegen das sekundäre Schneidwerkzeug (3; 4; 5) zu pressen, das in dem Schneidfenster (14) angeordnet ist.

12. Vorrichtung zur Zubereitung von Nahrungsmitteln (9) nach einem der Ansprüche 8 bis 11 in Abhängigkeit von Anspruch 7, **dadurch gekennzeichnet, dass** eine (213) der umlaufenden Kanten (213, 214) und der ringförmige Abschnitt (216) auf dem Boden (10) ruhen, wenn sich das rotierende Arbeitswerkzeug (200) in der Arbeitskammer (13) befindet.

13. Vorrichtung zur Zubereitung von Nahrungsmitteln (9) nach einem der Ansprüche 8 bis 12, **dadurch gekennzeichnet, dass** sie eine Aufnahme (300) aufweist, die zwischen der Abdeckung (6) und dem Gehäuseelement (1) eingefügt ist, um das rotierende Arbeitswerkzeug (200) in einer Unterbringungskonfiguration aufzunehmen.

14. Elektrisches Haushaltsgerät zur Zubereitung von Nahrungsmitteln, das ein Motorgehäuse (99) aufweist, das ein rotierendes Arbeitswerkzeug (200) dreht, das zu einer Vorrichtung zur Zubereitung von Nahrungsmitteln (9) gehört, **dadurch gekennzeichnet, dass** die Vorrichtung zur Zubereitung von Nahrungsmitteln (9) nach einem der Ansprüche 8 bis 13 ist.

15. Elektrisches Haushaltsgerät zur Zubereitung von Nahrungsmitteln nach Anspruch 14, **dadurch gekennzeichnet, dass** das Motorgehäuse (99) die Vorrichtung zur Zubereitung von Nahrungsmitteln (9) trägt.

## Claims

1. Reversible rotating work tool (200) comprising a driving axle (220) along an axis of rotation (Δ) and a main body (210) driven in rotation by the driving axle (220) along the axis of rotation (Δ), the main body (210) extending around the driving axle (220), the main body (210) having two opposite faces (211, 212), each one having a peripheral edge (213, 214) and at least one work member (231, 232) arranged between the driving axle (220) and the peripheral edge (213, 214),
the driving axle (220) having along the axis of rotation (Δ), a height (h) greater than a thickness (e) of the main body (210) along the axis of rotation (Δ), **characterised**
**in that** the driving axle (220) is
mounted so that it can be moved with respect to the main body (210) along the direction of the axis of rotation (Δ).

2. Rotating work tool (200) according to claim 1, **characterised in that** the driving axle (220) comprises a driving window (226) having a passage (227) along the direction of the axis of rotation (Δ).

3. Rotating work tool (200) according to claim 2, **characterised in that** the smallest dimension (d) of the driving window (226) is formed by a median restriction (228) along the direction of the axis of rotation (Δ).

4. Rotating work tool (200) according to one of claims 2 or 3, **characterised in that** the driving window (226) has a section increasing along the axis of rotation (Δ) on either side of the smallest dimension (d).

5. Rotating work tool (200) according to one of claims 1 to 4, **characterised in that** the driving axle (220) has a grooved shape.

6. Rotating work tool (200) according to one of claims 1 to 5, **characterised in that** the driving axle (220) is connected to the main body (210).

7. Rotating work tool (200) according to one of claims 1 to 6, **characterised in that** the work member(s) (231, 232) is/are arranged between a peripheral portion (215) of the main body (210) supporting the peripheral edges (213, 214) and an annular portion (216) of the main body (210) mounted sliding with the driving axle (220).

8. Device for preparing food (9) comprising a casing element (1), a rotating work tool (200) that can be moved in rotation around an axis of rotation (Δ), a cover (6), and means for driving (100) in rotation the rotating work tool (200), the casing element (1) comprising a bottom (10) provided with a seat for receiving (11) the rotating work tool (200), the casing element (1) partially delimiting a work chamber (13) open opposite the bottom (10), the cover (6) being adapted to partially close at least the work chamber (13), the cover (6) comprising a duct (68) for inserting food to be cut, **characterised in that** the rotating work tool (200) conforms with one of claims 2 to 4 or one of claims 5 to 7 when dependent on one of claims 2 to 4, **in that** the driving window (226) has in the cross-section with respect to the axis of rotation (Δ), a smaller dimension (d), and **in that** the driving means (100) comprise:
- a driving shaft (101) of axis of rotation (Δ) which is connected to the casing element (1) which has a driving head (102) extending into the work chamber (13) and having, in the cross-section, a greater dimension strictly less than the smallest dimension (d) of the driving window (226),
- a driving socket (103) which is free in rotation along the axis of rotation (Δ) with respect to the cover (6) and linked in axial translation to the cover (6), which comprises an axial driving bore (104) of complimentary shape to that of the driving head (102) and adapted to be engaged onto said driving head (102) in axial translation and which has an outer shape (106) complimentary to that of the driving window (226) and adapted to be engaged into said driving window (226) in axial translation.

9. Device for preparing food (9) according to claim 8, **characterised in that** the driving head (102) has a grooved shape.

10. Device for preparing food (9) according to one of claims 8 or 9, **characterised in that** the duct (68) extends along a longitudinal direction (D') substantially parallel to the axis of rotation (Δ).

11. Device for preparing food (9) according to one of claims 8 to 10, **characterised in that** the casing element (1) has a cutting window (14) arranged opposite the duct (68) and **in that** a secondary cutting tool (3; 4; 5) arranged in the cutting window (14) is used with a primary cutting tool (2) arranged in the work chamber (13) and driven by the outer shape (106) of the driving socket (103) of the cover (6), the primary cutting tool (2) comprising at least one main cutting stop (23) which is situated in a cutting plane substantially perpendicular to the axis of rotation (Δ), and a pressing bevel (24) which comes from the main cutting stop (23), which is arranged on the side of the secondary cutting tool (3; 4; 5) arranged in the cutting window (14), and which is tilted from the main cutting stop (23) in an opposite direction in the direction of rotation of the primary cutting tool (2), so as to press sliced food against the secondary cutting tool (3; 4; 5) arranged in the cutting window (14).

12. Device for preparing food (9) according to one of claims 8 to 11 when dependent on claim 7, **characterised in that** one (213) of the peripheral edges (213, 214) and the annular portion (216) rests on the bottom (10) when the rotating work tool (200) is in place in the work chamber (13).

13. Device for preparing food (9) according to one of claims 8 to 12, **characterised in that** it comprises a container (300) which could be interleaved between the cover (6) and the casing element (1) to receive the rotating work tool (200) in storage configuration.

14. Household electrical appliance for preparing food comprising a motorised casing (99) driving in rotation a rotating work tool (200) belonging to a device for preparing food (9), **characterised in that** the device for preparing food (9) conforms with one of claims 8 to 13.

15. Household electrical appliance for preparing food according to claim 14, **characterised in that** the motorised casing (99) supports the device for preparing food (9).
